# FASCICULE DE BREVET EUROPEEN

(11) **EP 2 901 279 B1**
(45) Date de publication et mention de la délivrance du brevet: **21.04.2021**
(21) Numéro de dépôt: 13779288.3
(22) Date de dépôt: 23.09.2013
(51) Int. Cl.: G06F 9/50, G06F 21/62

(54) **DISPOSITIF ET PROCEDE DE GESTION DE L'ACCES A UN ENSEMBLE DE RESSOURCES INFORMATIQUES ET RESEAUX DANS UN SYSTEME INFORMATIQUE EN NUAGE**
GERÄT UND VERFAHREN FÜR DIE VERWALTUNG DES ZUGRIFFS AUF EINE REIHE VON NETZWERK-RESSOURCEN IN EINEM CLOUD SYSTEM
DEVICE AND METHOD FOR MANAGING ACCESS TO A SET OF NETWORK RESOURCES MADE AVAILABLE IN A CLOUD SYSTEM

(30) Priorité: 27.09.2012 FR 1259122
(43) Date de publication de la demande: 05.08.2015
(73) Titulaire: ORANGE, 75015 Paris (FR)
(72) Inventeur: HE, Ruan, F-92130 Issy Les Moulineaux (FR); LEBOURGEOIS, Jacques, F-75010 Paris (FR); TERRIER, Julien, F-33100 Bordeaux (FR)
(74) Mandataire: Cabinet Beau de Loménie
(86) Numéro de dépôt international: PCT/FR2013/052207
(87) Numéro de publication internationale: WO 2014/049251

(56) Documents cités:
- US-A1- 2012 102 539
- EI EI MON ET AL: "The privacy-aware access control system using attribute-and role-based access control in private cloud", BROADBAND NETWORK AND MULTIMEDIA TECHNOLOGY (IC-BNMT), 2011 4TH IEEE INTERNATIONAL CONFERENCE ON, IEEE, 28 octobre 2011 (2011-10-28), pages 447-451, XP032118530, DOI: 10.1109/ICBNMT.2011.6155974 ISBN: 978-1-61284-158-8
- Mustapha Bensaidi ET AL: "Politique de contrôle d'accès au Cloud Computing", Journées nationales de la Sécurité des Réseaux et Systèmes, 21 avril 2012 (2012-04-21), pages 1-7, XP055065289, Extrait de l'Internet: URL:http://ieeexplore.ieee.org/ielx5/62416 81/6249222/06249249.pdf?tp=&arnumber=62492 49&isnumber=6249222 [extrait le 2013-06-04]
- SANDHU R S: "ROLE-BASED ACCESS CONTROL MODELS", COMPUTER, IEEE SERVICE CENTER, LOS ALAMITOS, CA, US, vol. 29, no. 2, 1 février 1996 (1996-02-01), pages 38-47, XP000556012, ISSN: 0018-9162, DOI: 10.1109/2.485845 cité dans la demande
- A. Abou El Kalam ET AL: "Organization based access control", POLICY '03 Proceedings of the 4th IEEE International Workshop on Policies for Distributed Systems and Networks, 6 juin 2003 (2003-06-06), pages 1-12, XP055065287, Extrait de l'Internet: URL:http://ieeexplore.ieee.org/ielx5/8577/ 27164/01206966.pdf?tp=&arnumber=1206966&is number=27164 [extrait le 2013-06-04] cité dans la demande
- Itu-T: "FG Cloud TR - Part 1: Introduction to the cloud ecosystem: definitions, taxonomies, use cases and high-level requirements", Technical Report, 1 février 2012 (2012-02-01), pages 1-69, XP055065283, Extrait de l'Internet: URL:http://www.itu.int/dms_pub/itu-t/opb/f g/T-FG-CLOUD-2012-P1-PDF-E.pdf [extrait le 2013-06-04] cité dans la demande

## Description

### Arrière-plan de l'invention

L'invention se rapporte au domaine général des télécommunications, et notamment aux systèmes informatiques dits « en nuage », connus également sous le nom de systèmes de « cloud computing ».

Elle concerne plus particulièrement l'accès par un utilisateur d'une entité, telle une entreprise, à des ressources informatiques et réseaux mises à la disposition de cette entité par un système de cloud computing.

Selon la définition donnée par le National Institute of Standards and Technology (NIST), l'informatique en nuage ou « cloud computing » est un modèle permettant à des utilisateurs d'accéder via un réseau, à la demande et en libre-service, à des ressources informatiques et réseaux telles un espace de stockage, de la puissance de calcul, des applications, des logiciels ou encore des services, qui sont virtualisées (i.e. rendues virtuelles) et mutualisées.

Autrement dit, les ressources informatiques et réseaux ne se trouvent plus sur un serveur local d'une entité ou sur un poste d'un utilisateur, mais sont, conformément au concept de cloud computing, dématérialisées dans un nuage composé de plusieurs serveurs distants interconnectés entre eux, et accessibles par les utilisateurs via par exemple une application réseau. Les utilisateurs peuvent ainsi accéder de manière évolutive à ces ressources, sans avoir à gérer l'infrastructure sous-jacente de gestion de ces ressources qui est souvent complexe.

Le concept de « cloud computing » est décrit plus en détail dans le document édité par l'ITU (International Telecommunication Union) intitulé « FG Cloud TR, version 1.0 - Part 1 : Introduction to the cloud ecosystem : définitions, taxonomies, use cases and high-level requirements », février 2012.

De façon connue, le « cloud computing » bénéficie de nombreux avantages :
- flexibilité et diversité des ressources qui sont mutualisées et quasiment illimitées,
- évolutivité possible des ressources, fournies à la demande,
- administration simple et automatisée des infrastructures informatiques et réseaux des entreprises, et réduction des coûts d'administration,
- etc.

Un enjeu majeur du concept de « cloud computing » est toutefois de garantir la protection et la sécurisation de l'accès aux ressources.

En effet, passer d'un environnement informatique traditionnel, sécurisé et fermé, à une infrastructure dans un nuage, ouverte et mutualisée, sur laquelle l'utilisateur ou l'entreprise n'a aucun contrôle, et qui est accessible via un réseau de télécommunications tel que le réseau public Internet, particulièrement vulnérable et sans cesse sujet aux attaques et aux piratages informatiques, n'est pas sans susciter quelques inquiétudes chez les potentiels utilisateurs en termes de sécurité.

Le contrôle d'accès apparait donc aujourd'hui pour l'ITU comme un moyen fondamental pour sécuriser l'accès à des systèmes informatiques en nuage.

De nombreux mécanismes existent dans l'état de la technique actuel pour contrôler (et sécuriser) l'accès à un système informatique (ou de façon équivalente, à un système d'information) d'entités ou d'organisations telles une entreprise.

Ces mécanismes se basent essentiellement sur deux éléments, à savoir :
- la définition d'une politique en matière de droits d'accès formulée selon une approche sujet-objet-action, i.e. tel sujet a la permission ou non de réaliser telle action sur tel objet, et
- la mise en œuvre de cette politique sur réception d'une requête d'un utilisateur souhaitant accéder aux ressources offertes par le système informatique, via un contrôle des droits d'accès de l'utilisateur à ces ressources.

De tels mécanismes sont par exemple les modèles de contrôle d'accès RBAC (Role-Based Access Control) et OrBAC (Organization-Based Access Control), décrits respectivement dans les documents de R-S. Sandhu et al., « Role-Based Access Control Models », IEEE Computer 29(2), pages 38-47, 1996, et de A. Abou El Kalam et al., « Organization Based Access Control », 4th IEEE International Workshop on Policies for Distributed Systems and Networks, 2003.

Ces modèles s'appuient sur un concept d'organisation, et permettent de modéliser une variété de politiques de sécurité définies pour et par cette organisation pour l'accès à ses ressources.

Ainsi, plus précisément, le modèle OrBAC introduit les notions de rôles, d'activités et de vues pour permettre de définir une politique de sécurité associée à une organisation, où :
- un rôle est un ensemble de sujets sur lequel les mêmes règles de sécurité sont appliquées ;
- une activité est un ensemble d'actions sur lequel les mêmes règles de sécurité sont appliquées ; et
- une vue est un ensemble d'objets sur lequel les mêmes règles de sécurité sont appliquées.

L'accès aux ressources de l'organisation est alors contrôlé en spécifiant si un rôle a la permission ou non de réaliser une activité sur une vue.

Si ces modèles sont particulièrement bien adaptés pour refléter la répartition en termes des droits d'accès au sein d'une entité telle une entreprise et peuvent être ainsi utilisés efficacement pour gérer l'accès à de ressources relativement figées dans des systèmes informatiques traditionnels tels que ceux utilisés aujourd'hui dans les entreprises, leur application en l'état à des systèmes de « cloud computing » est difficile et s'avère par ailleurs insuffisante pour prendre en compte les spécificités de ces systèmes.

En effet, une caractéristique essentielle d'un système de « cloud computing » est l'évolution dynamique des ressources attribuées par ce système à une entité, en fonction des besoins de cette entité.

Par ailleurs, ces ressources sont allouées dynamiquement par le système de « cloud computing » à l'entité et non spécifiquement à des utilisateurs : autrement dit, tous les utilisateurs de l'entité partagent toutes les ressources allouées à cette entité.

Il convient par ailleurs de noter que l'organisation même de l'entité peut être amenée à évoluer en cours d'utilisation du système de « cloud computing ».

De ce fait, l'accès aux ressources d'un système informatique en nuage ou système de « cloud computing » ne peut se limiter à un contrôle des droits d'accès à ces ressources tel que défini dans les modèles RBAC et OrBAC aujourd'hui envisagés pour la gestion des systèmes informatiques traditionnels.

Le document US 2012/102539 A1 décrit un mécanisme d'enregistrement de droits d'accès à des ressources d'un système informatique en nuage ainsi qu'un gestionnaire d'accès à ces ressources en fonction de ces droits enregistrés. Ce document divulgue, en particulier, l'option d'enregistrer des droits d'accès pour des éléments d'une structure hiérarchique représentant une organisation comprenant plusieurs utilisateurs et/ou groupes d'utilisateurs.

Le document de Ei Ei Mon et al., « The privacy-aware access control system using attribute- and role-based access control in private cloud », 4th IEEE International Conférence on Broadband Network and Multimedia Technology, 28 octobre 2011, décrit un procédé de contrôle d'accès aux ressources d'un système informatique en nuage sur la base de rôles attribués aux utilisateurs et de droits d'accès accordés aux utilisateurs via l'utilisation de politiques sur des attributs utilisateur, ressources et/ou environnement.

Il existe donc un besoin d'un mécanisme de gestion de l'accès à des ressources mises à disposition par un système informatique en nuage prenant en compte les spécificités mentionnées précédemment de ce type de système.

### Objet et résumé de l'invention

L'invention est spécifiée par les revendications indépendantes annexées. En outre, des modes de réalisation préférés sont définis par les revendications dépendantes. L'invention répond notamment à ce besoin en proposant un procédé de gestion de l'accès à un ensemble de ressources informatiques et réseaux mis à la disposition d'une entité comprenant une pluralité d'utilisateurs par un système informatique en nuage, ce procédé comprenant :
- une étape de maintien à jour :
   ∘ d'un premier modèle décrivant l'ensemble de ressources informatiques et réseaux ; et
   ∘ d'un second modèle hiérarchique à plusieurs niveaux décrivant l'entité, chaque niveau de ce second modèle comprenant au moins un élément regroupant un ou plusieurs utilisateurs de l'entité, chaque élément d'un niveau hiérarchique étant associé à un algorithme d'allocation d'au moins une partie de l'ensemble de ressources informatiques et réseaux, l'union des éléments de ce niveau hiérarchique regroupant la pluralité d'utilisateurs de l'entité,
   cette étape de maintien à jour étant réalisée de sorte que le premier modèle et le second modèle reflètent un état courant de l'ensemble de ressources et un état courant de l'entité ;
- sur réception d'une requête d'accès d'au moins un utilisateur de l'entité à au moins une ressource de l'ensemble de ressources désignée dans la requête :
   ∘ une étape d'identification des ressources destinées audit au moins un utilisateur parmi l'ensemble de ressources en appliquant les algorithmes d'allocation de ressources associés aux éléments du second modèle maintenu à jour à l'état courant de l'ensemble de ressources reflété par le premier modèle ;
   ∘ une étape de vérification de la compatibilité des ressources identifiées pour ledit au moins un utilisateur avec ladite au moins une ressource désignée dans la requête ; et
   ∘ une étape de rejet de la requête en cas d'incompatibilité.

Corrélativement, l'invention vise aussi un dispositif de gestion de l'accès à un ensemble de ressources informatiques et réseaux mis à la disposition d'une entité comprenant une pluralité d'utilisateurs, par un système informatique en nuage, ledit dispositif comprenant :
- un module de maintien à jour :
   ∘ d'un premier modèle décrivant l'ensemble de ressources informatiques et réseaux ; et
   ∘ d'un second modèle hiérarchique à plusieurs niveaux décrivant l'entité, chaque niveau de ce second modèle comprenant au moins un élément regroupant un ou plusieurs utilisateurs de l'entité, chaque élément d'un niveau hiérarchique étant associé à un algorithme d'allocation d'au moins une partie de l'ensemble de ressources informatiques et réseaux, l'union des éléments de ce niveau hiérarchique regroupant la pluralité d'utilisateurs de l'entité ;
   ce module de maintien à jour étant configuré de sorte que le premier modèle et le second modèle reflètent un état courant de l'ensemble de ressources informatiques et réseaux et un état courant de l'entité ;
- un module, activé sur réception d'une requête d'accès d'au moins un utilisateur de l'entité pour accéder à au moins une ressource de l'ensemble de ressources désignée dans la requête, comprenant :
   ∘ une unité d'identification des ressources destinées audit au moins un utilisateur parmi l'ensemble de ressources, apte à appliquer les algorithmes d'allocation associés aux éléments du second modèle maintenu à jour à l'état courant de l'ensemble de ressources reflété par le premier modèle ;
   ∘ une unité de vérification de la compatibilité des ressources identifiées pour ledit au moins un utilisateur avec ladite au moins une ressource désignée dans la requête ; et
   ∘ une unité de rejet de la requête, activée en cas d'incompatibilité.

L'invention propose ainsi une gestion dynamique de l'accès aux ressources informatiques et réseaux mises à la disposition d'une entité par un système de cloud computing, prenant en compte l'état courant de ces ressources et de l'entité. L'invention est de ce fait parfaitement adaptée aux spécificités des systèmes de cloud computing.

Pour prendre en compte l'évolutivité des ressources informatiques et réseaux mises à la disposition de l'entité par le système informatique en fonction de la demande, ainsi que les changements potentiels pouvant affecter cette entité, l'invention propose de contrôler, à chaque tentative d'accès à ces ressources par un utilisateur de l'entité, l'état courant (autrement dit, réel) des ressources destinées à cet utilisateur compte tenu des politiques de partage des ressources définies au sein de l'entité entre les utilisateurs.

Ce nouveau degré de contrôle proposé par l'invention permet de vérifier que la requête de l'utilisateur est compatible avec l'état courant des ressources informatiques et réseaux allouées à l'entité par le système informatique en nuage (c'est-à-dire, l'état des ressources au moment de la réception de la requête) et à la répartition envisagée de ces ressources entre les utilisateurs de l'entité.

A cet effet, l'invention s'appuie avantageusement sur différents points, à savoir :
- la définition et le maintien à jour de deux modèles décrivant respectivement l'ensemble (ou de façon équivalente le pool) de ressources informatiques et réseaux mis à la disposition de l'entité par le système informatique en nuage, et l'organisation hiérarchique de l'entité ainsi que les règles (algorithmes) appliquées au sein de l'entité, à chaque niveau hiérarchique, pour le partage des ressources allouées à l'entité entre les utilisateurs ; et
- sur réception d'une requête d'accès d'un utilisateur (ou d'un groupe d'utilisateurs) à tout ou partie de l'ensemble des ressources, la détermination des ressources courantes allouables à cet utilisateur, en appliquant en temps réel les règles de partage des ressources définies au sein de l'entité pour chaque niveau hiérarchique, à l'état courant du pool de ressources alloué à l'entité, et la vérification de la compatibilité de la requête de l'utilisateur avec les ressources allouables à cet utilisateur à l'instant courant.

De cette sorte, on s'assure qu'une allocation ou une réallocation des ressources mises à la disposition de l'entité par le système de cloud computing est bien prise en compte, de même qu'un éventuel changement dans l'organisation de l'entité. L'application en temps réel des algorithmes d'allocation ou de partage des ressources définis au sein de l'entité, permet en outre d'actualiser la répartition des ressources entre les utilisateurs au vu de l'état courant de l'ensemble des ressources mis à la disposition de l'entité par le système informatique.

Différents algorithmes d'allocation de ressources peuvent être associés à un élément d'un niveau hiérarchique du second modèle, comme par exemple :
- un algorithme de répartition équitable des ressources entre des éléments du niveau hiérarchique ; ou
- un algorithme consistant à allouer à cet élément une partie fixe des ressources, les ressources non allouées audit élément étant réparties entre les autres éléments du niveau hiérarchique. Un tel algorithme permet avantageusement d'établir des priorités entre les éléments de chaque niveau hiérarchique pour accéder aux ressources allouées à l'entité.

Ces algorithmes sont particulièrement simples et rapides à appliquer en temps réel.

Par ailleurs, ils reflètent bien les différentes alternatives généralement envisagées dans une organisation ou une entité telle une entreprise pour le partage des ressources entre les utilisateurs et les différentes sous-entités la constituant.

Bien entendu, d'autres algorithmes peuvent être envisagés en variante.

Les algorithmes d'allocation des ressources définis par et pour l'entité peuvent être amenés à évoluer, en fonction notamment de la suppression et/ou de l'ajout d'utilisateurs, d'éléments ou de niveaux hiérarchiques dans l'entité, ou des ressources mises à la disposition de l'entité par le système informatique en nuage.

Il convient de noter que les premier et second modèles sur lesquels s'appuie l'invention sont relativement génériques, et donc flexibles. Ils peuvent être aisément mis à jour pour refléter tout changement apparaissant dans l'ensemble de ressources informatiques et réseaux et/ou dans l'organisation de l'entité à laquelle cet ensemble est alloué. Le terme « organisation de l'entité » est à considérer ici dans son sens large, c'est-à-dire qu'il inclut aussi bien l'ajout ou la suppression d'utilisateurs et/ou de niveaux hiérarchiques dans l'entité, mais également une évolution des règles de partage des ressources entre les différents utilisateurs et/ou niveaux hiérarchiques de l'entité.

Le premier modèle offre une image et une description des ressources allouées à l'entité et partagées entre les utilisateurs. Ces ressources sont allouées de façon unique à l'entité.

Le second modèle hiérarchique permet quant à lui de descendre jusqu'aux utilisateurs de l'entité, ce qui est particulièrement avantageux puisque les requêtes d'accès viennent généralement des utilisateurs, plutôt que de sous-entités (i.e. subdivisions ou groupes) de l'entité.

La structure hiérarchique du second modèle permet de créer ou de supprimer facilement des utilisateurs, des types d'utilisateurs ou encore des groupes d'utilisateurs.

Il permet par ailleurs d'établir des relations hiérarchiques en termes d'accès aux ressources entre l'entité, ses sous-entités, et ses utilisateurs. Le second modèle reflète par conséquent bien l'organisation actuelle de nombreuses entreprises et est cohérent avec le premier modèle utilisé pour décrire l'ensemble de ressources mis à la disposition de l'entité par le système informatique en nuage.

On notera que l'invention est avantageusement compatible avec l'architecture de référence XACML (eXtensible Access Control Markup Language) définie par le standard IETF (et utilisée par le modèle de contrôle d'accès OrBAC) pour l'implémentation du contrôle d'accès dans les systèmes d'information. Cette architecture XACML se base en effet, de façon connue en soi, sur cinq types de blocs fonctionnels, à savoir :
- un bloc chargé d'appliquer une politique de contrôle d'accès, ou bloc PEP (Policy Enforcement Point) ;
- un bloc chargé de prendre une décision en matière d'accès, ou bloc PDP (Policy Décision Point) ;
- un répertoire contenant les politiques de contrôle d'accès (Policy Repository) ;
- un bloc chargé de la gestion des informations en relation avec les politiques d'accès, ou bloc PIP (Policy Information Point) ; et
- un bloc responsable de l'administration des politiques d'accès, ou bloc PAP (Policy Administration Point), qui spécifie et gère les politiques d'accès.

L'invention propose ainsi d'étendre les fonctions des blocs PIP et PDP définis dans l'architecture XACML, de sorte à prendre en compte les informations fournies par le système de « cloud computing » et à contrôler la disponibilité des ressources requises par l'utilisateur.

Le contrôle à l'accès proposé par l'invention est préférentiellement combiné à un contrôle des droits d'accès de l'utilisateur à la ou aux ressources désignées dans la requête.

Ainsi, dans un mode particulier de réalisation le procédé comprend en outre une étape de contrôle d'un droit d'accès dudit au moins un utilisateur à ladite au moins une ressource désignée dans la requête, la requête étant rejetée si ledit au moins un utilisateur n'a pas le droit d'accéder à ladite au moins une ressource.

L'étape de contrôle d'accès peut être avantageusement mise en œuvre avant l'application des algorithmes d'allocation des ressources à l'état courant de l'ensemble des ressources informatiques et réseaux et de l'entité, et conditionner cette application, afin d'éviter le déroulement d'opérations inutiles lorsque l'utilisateur ne dispose pas d'un droit d'accès aux ressources requises.

Cette étape de contrôle des droits d'accès de l'utilisateur peut être mise en œuvre par exemple à l'aide d'un mécanisme de type OrBAC (Organization Based Access Control), qui peut s'appuyer facilement sur le second modèle.

A cet effet, dans un mode particulier de réalisation, on associe à chaque élément d'au moins un niveau hiérarchique dans le second modèle hiérarchique, des droits d'accès aux ressources de l'ensemble de ressources, l'étape de contrôle du droit d'accès étant mise en œuvre à partir du second modèle hiérarchique maintenu à jour.

Par ailleurs, dans un autre mode de réalisation, on peut également, pour au moins un niveau hiérarchique du second modèle, associer un rôle à chaque élément de ce niveau. L'invention permet ainsi de s'appuyer sur les modèles définis par OrBAC, tout en assurant une gestion de l'accès aux ressources flexible, dynamique, et adaptée à l'évolutivité du pool de ressources allouées à l'entité.

Dans un mode particulier de réalisation, le premier modèle décrivant l'ensemble des ressources informatiques et réseaux est également un modèle hiérarchique à plusieurs niveaux.

Par exemple, on peut envisager un niveau hiérarchique décrivant les ressources informatiques et réseaux virtuelles constituant l'ensemble des ressources allouées à l'entité (ex. espace de stockage, puissance de calcul, connectivité réseau, etc), et un autre niveau hiérarchique décrivant quant à lui les ressources physiques associées à ces ressources virtuelles (ex. disques de stockage, serveurs, adresses IP, VLAN, etc.).

Un tel modèle reste générique et particulièrement flexible : il peut être aisément appliqué à différents contextes d'usage du « cloud computing » (ex. pour des ressources de type IaaS (Infrastructure as a Service), SaaS (Software as a Service), etc.).

Par ailleurs, il offre une vue d'ensemble et à différents niveaux (ressources virtuelles et ressources physiques associées) des ressources allouées à l'entité.

Dans un mode particulier de réalisation, les différentes étapes du procédé de gestion sont déterminées par des instructions de programmes d'ordinateurs.

En conséquence, l'invention vise aussi un programme d'ordinateur sur un support d'informations, ce programme étant susceptible d'être mis en œuvre dans un système informatique en nuage ou plus généralement dans un ordinateur, ce programme comportant des instructions adaptées à la mise en œuvre des étapes d'un procédé de gestion tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations eut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un autre aspect, l'invention vise également un système informatique en nuage mettant à disposition d'une entité comprenant une pluralité d'utilisateurs, un ensemble de ressources informatiques et réseaux et comprenant un dispositif de gestion de l'accès à cet ensemble de ressources selon l'invention.

Le système informatique dispose des mêmes avantages que ceux cités précédemment pour le dispositif et le procédé de gestion selon l'invention.

On peut également envisager, dans d'autres modes de réalisation, que le procédé de gestion, le dispositif de gestion et le système selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif.

Sur les figures :
- la figure 1 représente, de façon schématique, un système informatique en nuage et un dispositif de gestion conformes à l'invention, dans un mode particulier de réalisation ;
- la figure 2 illustre, de façon schématique, l'architecture fonctionnelle du dispositif de gestion de la figure 1 ;
- les figures 3A et 3B illustrent respectivement des exemples de modèles hiérarchiques décrivant l'ensemble de ressources et l'entité, et pouvant être utilisés lors de la mise en œuvre de l'invention ;
- la figure 4 représente, de façon schématique, l'architecture matérielle du dispositif de gestion de la figure 1 ;
- les figures 5A et 5B illustrent, sous forme d'organigramme, les principales étapes d'un procédé de gestion mises en œuvre par le dispositif de gestion de la figure 1 ; et
- les figures 6A et 6B représentent des exemples de ressources allouables aux différents éléments des différents niveaux du modèle hiérarchique de la figure 3B, pour deux configurations distinctes de l'ensemble de ressources.

### Description détaillée de l'invention

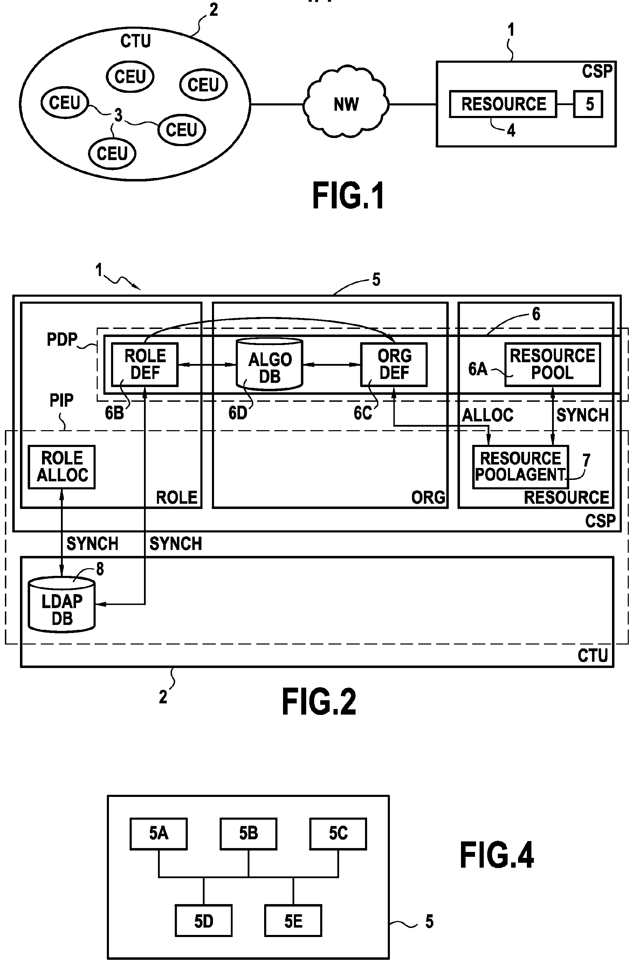

La **figure 1** représente, dans son environnement, un système 1 informatique en nuage (ou système de « cloud computing »), conforme à l'invention, dans un mode particulier de réalisation.

Dans l'exemple envisagé à la figure 1, le système 1 est apte à mettre à la disposition d'une entité 2 comprenant une pluralité d'utilisateurs 3, un ensemble 4 de ressources informatiques et réseaux, cet ensemble étant susceptible de varier dans le temps en fonction de la demande des utilisateurs 3 de l'entité 2 (ex. plus ou moins de ressources, ajout de nouveaux types de ressources informatiques et réseaux, etc.).

On suppose ici que les utilisateurs 3 sont équipés de terminaux informatiques, tels que par exemple des ordinateurs portables ou fixes, des assistants personnels, etc., leur permettant d'accéder aux ressources informatiques et réseaux de l'ensemble 4, et de les exploiter.

La gestion de l'accès aux ressources informatiques et réseaux de l'ensemble 4 par les utilisateurs 3 de l'entité 2 est assurée par un dispositif 5 de gestion conforme à l'invention, intégré dans le système 1.

On suppose ici, à titre illustratif, que l'entité 2 est une entreprise, et que l'ensemble 4 de ressources est composé de ressources IaaS variées, telles que définies dans le document édité par l'ITU intitulé « FG Cloud TR, version 1.0 - Part 1 : Introduction to the cloud ecosystem : définitions, taxonomies, use cases and high-level requirements », février 2012.

Ces ressources IaaS de l'ensemble 4 incluent notamment des ressources virtuelles telles que de la puissance de calcul, des espaces de stockage, et des services de connectivité réseau (ex. VLAN (Virtual Lan Access Network), pare-feu ou « firewall » en anglais), ainsi que les ressources physiques (ex. disques, serveurs, etc.) associées à ces ressources virtuelles.

L'ensemble 4 des ressources est partagé par l'ensemble des utilisateurs 3 de l'entité 2.

Bien entendu, l'invention s'applique également à d'autres types d'entités ou organisations, de même qu'à d'autres catégories de ressources informatiques et réseaux, telles que par exemple à des ressources logicielles ou applicatives de type SaaS.

Le scénario envisagé à la figure 1 repose sur trois principaux acteurs :
- un fournisseur d'un service de « cloud computing » ou CSP (Cloud Service Provider), opérateur du système informatique en nuage 1, et fournissant à diverses organisations ou entités (telles l'entité 2), des ressources informatiques et réseaux virtuelles et mutualisées (dont l'ensemble 4 de ressources informatiques et réseaux), via un réseau de télécommunications NW (NW est par exemple le réseau public Internet) ;
- l'entité 2 ou CTU (Cloud Tenant User), cliente de l'opérateur du système informatique 1 pour l'ensemble 4 de ressources ; et
- les utilisateurs 3 de l'entité 2 ou CEU (Cloud End User), qui sont les utilisateurs finaux des ressources de l'ensemble 4 acheté par l'entité 2 à l'opérateur du système informatique en nuage 1, et qui accèdent à ces ressources via leurs terminaux respectifs.

Ce scénario est un scénario classique dans un contexte de « cloud computing ».

Comme mentionné précédemment, le dispositif 5 du système 1 est en charge de la gestion de l'accès aux ressources informatiques et réseaux mises à la disposition de l'entité 2 par le système 1, autrement dit, aux ressources de l'ensemble 4.

Conformément à l'invention, la gestion de l'accès mise en œuvre par le dispositif 5 permet de s'adapter avantageusement aux variations d'une part, de l'ensemble 4 de ressources informatiques et réseaux, et d'autre part, de l'entité 2 et de son organisation.

En effet, dans un système de cloud computing comme le système 1, les ressources mises à la disposition des entités clientes sont susceptibles de varier en fonction de la demande des utilisateurs de ces entités : ainsi, par exemple, les quantités de ressources (ex. espace de stockage, puissance de calcul, etc.) mises à la disposition d'une entité donnée peuvent évoluer à la hausse ou à la baisse selon les requêtes des utilisateurs se partageant ces ressources, ou en variante, d'autres types de ressources peuvent être ajoutés à l'ensemble de ressources pour satisfaire les utilisateurs de cette entité. On parle alors de processus d'auto-dimensionnement des ressources ou « d'auto-scaling » en anglais : le « cloud computing » est un système flexible et évolutif en fonction de la demande.

De même, l'organisation (typiquement hiérarchique) d'une entité peut être amenée à évoluer lors de la fourniture du service de cloud computing par le système 1.

Par exemple, lorsque cette entité est une entreprise, de nouveaux départements peuvent être créés avec des besoins informatiques et réseaux spécifiques, qui viennent s'ajouter aux besoins des autres départements de l'entreprise, ou de nouveaux utilisateurs peuvent intégrer tel ou tel département de l'entreprise, etc.

Ce changement dans l'organisation de l'entité a un impact en termes de gestion des ressources informatiques et réseaux attribuées à l'entité, qui peut se traduire non seulement quantitativement, mais également en termes de droits d'accès à ces ressources (des utilisateurs ou des sous-groupes distincts de l'entité peuvent avoir des droits d'accès distincts sur les ressources attribuées à l'entité).

La **figure 2** illustre l'architecture fonctionnelle du dispositif 5 de gestion mise en œuvre conformément à l'invention pour prendre en compte ces potentielles évolutions de l'ensemble 4 de ressources et de l'entité 2, dans le mode de réalisation décrit ici.

Plus précisément, le dispositif 5 de gestion comprend :
- un module 6 d'élaboration et de maintien à jour :
   o d'un premier modèle MOD1 décrivant l'ensemble 4 de ressources informatiques et réseaux mis à disposition de l'entité 2 par le système informatique 1 ; et
   o d'un second modèle MOD2 hiérarchique à plusieurs niveaux décrivant l'entité 2 ;
   le module 6 étant configuré de sorte à garantir que le premier modèle MOD1 et le second modèle MOD2 reflètent un état courant (autrement dit réel) respectivement de l'ensemble 4 de ressources et de l'entité 2 ; et
- un module 7 de gestion, activé sur réception d'une requête d'un utilisateur ou d'un groupe d'utilisateurs de l'entité 2, émise via un terminal, pour accéder à une ou plusieurs ressources de l'ensemble 4 désignée(s) dans la requête. Dans le mode de réalisation décrit ici, ce module 7 contrôle, à l'aide des modèles MOD1 et MOD2 maintenus à jour par le module 6, d'une part que l'utilisateur ou le groupe d'utilisateurs à l'origine de la requête est en droit d'accéder à la ou aux ressources désignée(s) dans la requête, et d'autre part, que la requête de l'utilisateur ou du groupe d'utilisateurs est compatible avec les ressources destinées à cet utilisateur ou ce groupe d'utilisateurs, compte tenu des règles de répartition des ressources définies par l'entité 2 entre ses utilisateurs.

Dans l'exemple illustré à la figure 2, le module 6 de maintien à jour s'appuie sur une unité 6A de définition de l'ensemble 4 de ressources pour élaborer et maintenir à jour le premier modèle MOD1 décrivant l'ensemble 4 de ressources informatiques et réseaux.

Le premier modèle MOD1 est ici un modèle hiérarchique multi-niveaux, dans lequel :
- la racine correspond à l'ensemble 4 à proprement parler ;
- le niveau le plus bas (i.e. le plus éloigné de la racine) est constitué de ressources bas-niveau formant l'ensemble 4 (ex. disques, serveurs, etc.) ;
- les ressources bas-niveau sont regroupées par type de ressources (ex. stockage, calcul, réseau) pour constituer des niveaux hiérarchiques intermédiaires entre le niveau le plus bas et la racine.

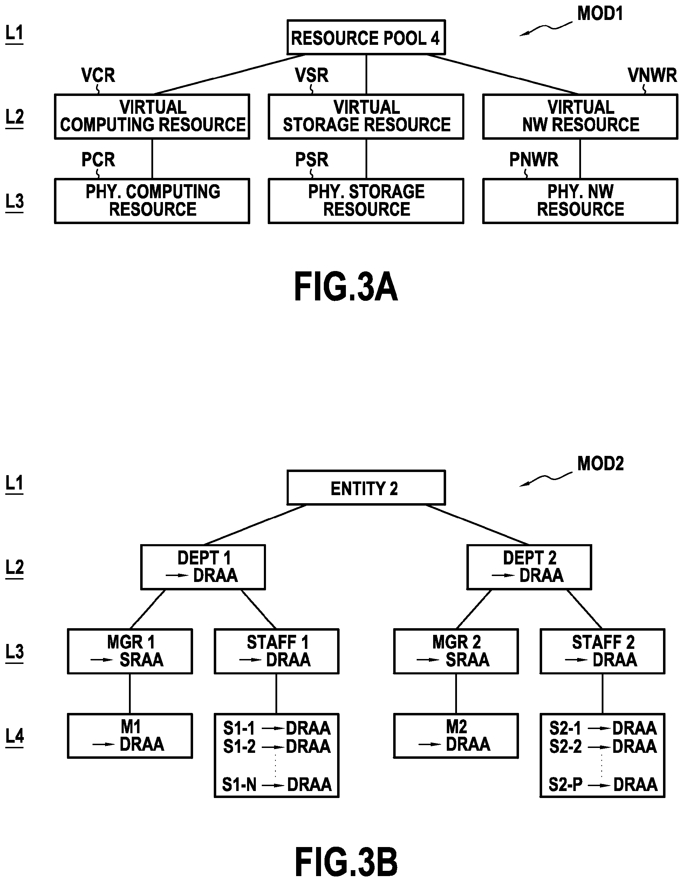

Un exemple d'un tel modèle est illustré sur la **figure 3A** pour un ensemble 4 de ressources IaaS. Le modèle MOD1 comprend selon cet exemple trois niveaux hiérarchiques L1, L2 et L3 :
- le niveau hiérarchique L1 est constitué de la racine du modèle, autrement dit de l'ensemble 4 lui-même ;
- le niveau hiérarchique L2 correspond aux ressources virtuelles de l'ensemble 4 : il est constitué ici d'un premier élément VCR correspondant aux ressources virtuelles de calcul informatique, d'un deuxième élément VSR correspondant aux ressources virtuelles de stockage, et d'un troisième élément VNWR correspondant aux ressources virtuelles liées à la connectivité réseau. L'union de ces trois éléments contient la totalité des ressources informatiques et réseaux virtuelles de l'ensemble 4 mises à la disposition de l'entité 2 par le système informatique 1 ; et
- le niveau hiérarchique L3 correspond aux ressources physiques de l'ensemble 4 : il est constitué ici d'un premier élément PCR correspondant aux ressources physiques dédiées au calcul informatique, d'un deuxième élément PSR correspondant aux ressources physiques dédiées au stockage, et d'un troisième élément PNWR correspondant aux ressources physiques dédiées à la connectivité réseau. L'union de ces trois éléments contient la totalité des ressources physiques de l'ensemble 4 mises à la disposition de l'entité 2 par le système informatique 1.

Chaque élément du modèle MOD1 se présente ici sous la forme d'une métadonnée. Chaque niveau hiérarchique #i du modèle MOD1 est associé à une table d'éléments, dans laquelle chaque élément pointe sur un ou plusieurs éléments du niveau hiérarchique #i+1.

Le modèle MOD1 est élaboré et maintenu à jour par l'unité 6A sur la base d'informations collectées auprès de l'opérateur du système informatique 1 (incluant notamment une description des ressources et un état courant de ces ressources, autrement dit, allouées ou non à l'entité 2 à un instant donné), via par exemple une interface logicielle de type API (Application Programming Interface).

Il convient de noter que l'ensemble 4 est alloué à un instant donné à une entité unique, à savoir l'entité 2, tous les membres de l'entité 2 partageant l'ensemble 4, c'est-à-dire, toutes les ressources contenues dans l'ensemble 4.

Comme mentionné précédemment, le module 6 élabore et maintient à jour également le second modèle MOD2 décrivant l'entité 2. Ce second modèle MOD2 est un modèle hiérarchique multi-niveaux dans lequel :
- la racine correspond à l'entité 2 à proprement parler ;
- le niveau le plus bas (i.e. le plus éloigné de la racine) est constitué des utilisateurs appartenant à l'entité 2 ;
- les niveaux hiérarchiques intermédiaires reflètent l'organisation hiérarchique de l'entité 2 en termes de départements (ou équipes ou groupes de façon plus générale), ainsi qu'également ici, en termes de rôles au sein de ces départements. Chaque niveau hiérarchique est constitué d'un ou de plusieurs éléments, chaque élément regroupant un ou plusieurs utilisateurs de l'entité 2, l'union des éléments d'un niveau hiérarchique réunissant l'ensemble des utilisateurs appartenant à l'entité 2.

Il convient de noter que chaque rôle défini dans les niveaux hiérarchiques peut avoir des privilèges différents notamment en termes de droits d'accès aux ressources (i.e. comme dans le modèle OrBAC évoqué précédemment), ou de partage des ressources de l'ensemble 4. Ainsi, dans le mode de réalisation décrit ici, on associe à chaque rôle des droits d'accès aux ressources de l'ensemble 4 spécifiques, de façon connue en soi, par exemple de façon similaire au modèle OrBAC. Bien entendu, ces droits d'accès peuvent également être amenés à évoluer dans le temps et sont maintenus à jour par le module 6 à partir d'informations collectées auprès de l'entité 2.

Par ailleurs, conformément à l'invention, chaque élément de chaque niveau hiérarchique du second modèle MOD2 est associé à un algorithme d'allocation de ressources, c'est-à-dire ici, d'allocation de tout ou partie des ressources informatiques et réseaux de l'ensemble 4 attribué à l'entité 2.

Ces algorithmes permettent de spécifier comment sont partagées les ressources de l'ensemble 4 entre les utilisateurs 3 de l'entité 2, ainsi qu'à chaque niveau hiérarchique du modèle MOD2. Des exemples de tels algorithmes sont notamment :
- un algorithme de répartition équitable des ressources entre des éléments du niveau hiérarchique désigné par DRAA pour « Default Resource Allocation Algorithm » en anglais ; et/ou
- un algorithme consistant à allouer à un élément d'un niveau hiérarchique une partie déterminée (en absolu ou en pourcentage) des ressources, les ressources non allouées à cet élément étant réparties entre les autres éléments du niveau hiérarchique, aussi désigné par SRAA pour « Static Resource Allocation Algorithm » en anglais.

Par souci de simplification on considère ici que l'entité 2 est associée par défaut à un algorithme DRAA, ce qui revient à lui allouer l'ensemble 4 des ressources (puisqu'elle est le seul élément appartenant au niveau hiérarchique associé à la racine du modèle MOD2).

On notera que le modèle MOD2 est générique, et de ce fait, particulièrement flexible. Il peut être modifié aisément pour prendre en compte des changements affectant l'entité 2 (ex. affectant l'organisation hiérarchique à proprement parler de l'entité 2 (création ou suppression d'un département, création ou suppression d'un rôle), ajout ou suppression d'utilisateurs, ou modifications des algorithmes de partage des ressources alloués aux différents éléments du modèle).

La **figure 3B** illustre un exemple de modèle MOD2 décrivant l'entité 2. Selon cet exemple, le modèle MOD2 comprend quatre niveaux hiérarchiques L1, L2, L3, L4 tels que :
- le niveau hiérarchique L1 est constitué de la racine du modèle, autrement dit de l'entité 2 elle-même ;
- le niveau hiérarchique L2 contient deux éléments, formés respectivement par les deux départements DEPT1 et DEPT2 de l'entité 2, chaque département regroupant un ou plusieurs utilisateurs de l'entité 2, et étant associé à un algorithme d'allocation de ressources de type DRAA ;
- le niveau hiérarchique L3 est formé de quatre éléments, décrivant respectivement différents rôles définis au sein des deux départements DEPT1 et DEPT2. Ainsi, les utilisateurs des départements DEPT1 et DEPT2 sont répartis dans l'exemple de la figure 3B selon deux rôles, à savoir un rôle de manager (MGR1 et MGR2), et un rôle associé au reste du personnel (STAFF1 et STAFF2). Les rôles de manager sont associés à un algorithme de partage des ressources de type SRAA tandis que le reste du personnel est associé à un algorithme de partage des ressources de type DRAA. Autrement dit, les managers MGR1 et MGR2 sont prioritaires en matière d'allocation des ressources avec l'allocation d'une partie fixe des ressources (ex. ici 6Go d'espace de stockage) ;
- le niveau hiérarchique L4 est formé de l'ensemble des utilisateurs 3 de l'entité 2 (i.e. un élément de L4 est un utilisateur de l'entité 2), rattachés aux éléments du niveau hiérarchique L3. Ainsi par exemple l'utilisateur M1 est un manager du groupe de managers MGR1 du département DEPT1 de l'entité 2. De façon similaire, les utilisateurs S1-1, S1-2,..., S1-N du niveau L4 sont des membres du personnel du groupe STAFF1 du département DEPT1 de l'entité 2, etc. Chaque utilisateur est associé à un algorithme de partage des ressources de type DRAA.

Autrement dit, chaque élément d'un niveau hiérarchique regroupe un ou plusieurs utilisateurs de l'entité 2, l'union des éléments d'un même niveau hiérarchique réunissant l'ensemble des utilisateurs 3 de l'entité 2.

Pour élaborer et maintenir à jour le modèle MOD2, le module 6 s'appuie sur plusieurs unités, à savoir :
- une unité 6B de définition de rôles au sein de l'entité 2 ;
- une unité 6C de définition de l'organisation hiérarchique de l'entité 2 ; et
- une unité 6D de définition des algorithmes d'allocation dynamique des ressources appliqués entre les différents niveaux hiérarchiques et rôles définis au sein de l'entité 2.

Ces unités 6B, 6C et 6D sont renseignées par l'entité 2, qui fournit une description de son organisation hiérarchique (incluant les notions de rôles définis au sein de chaque département) et des algorithmes d'allocation des ressources associés à chaque élément de chaque niveau hiérarchique, par exemple via une interface logicielle de type API.

Comme pour le modèle MOD1, chaque élément du modèle MOD2 se présente ici sous la forme d'une métadonnée, chaque niveau hiérarchique #i du modèle MOD2 étant associé à une table d'éléments, dans laquelle chaque élément pointe sur un ou plusieurs éléments du niveau hiérarchique #i+1.

Le modèle MOD2 est maintenu à jour par les unités 6B, 6C, et 6D sur la base d'informations collectées auprès de l'entité 2, et notamment d'une base de données 8 de type LDAP (Lightweight Directory Access Protocol) connue en soi, dans laquelle sont stockées les définitions et les attributions des rôles. Cette base de données 8 est maintenue à jour par l'entité 2 et interrogée (ou plus généralement les informations qu'elle contient sont exploitées) par les unités 6B, 6C et 6D via l'interface logicielle API mentionnée précédemment.

Le module 6 de maintien à jour et le module 7 de gestion de l'accès à l'ensemble 4 de ressources informatiques et réseaux mis à disposition par le système 1 sont, dans le mode de réalisation décrit ici, des modules logiciels.

Plus précisément, dans le mode de réalisation décrit ici, le dispositif 5 de gestion dispose de l'architecture matérielle d'un ordinateur, telle qu'illustrée schématiquement à la **figure 4****.** Il comprend notamment un processeur 5A, une mémoire vive 5B, une mémoire morte 5C, une mémoire flash non volatile 5D, ainsi que des moyens de communication 5E. Ces moyens de communication 5E comprennent notamment des moyens de communication avec l'entité 2 via le réseau NW (en particulier via l'API évoquée précédemment), ainsi que des moyens de communication avec l'opérateur du système 1 (mettant également en œuvre une API telle que mentionnée précédemment).

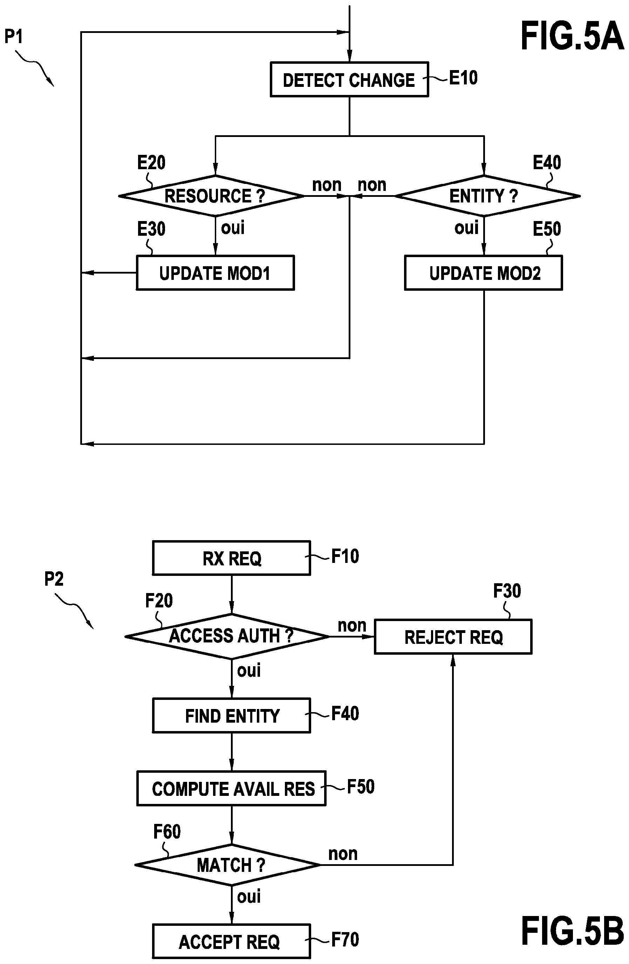

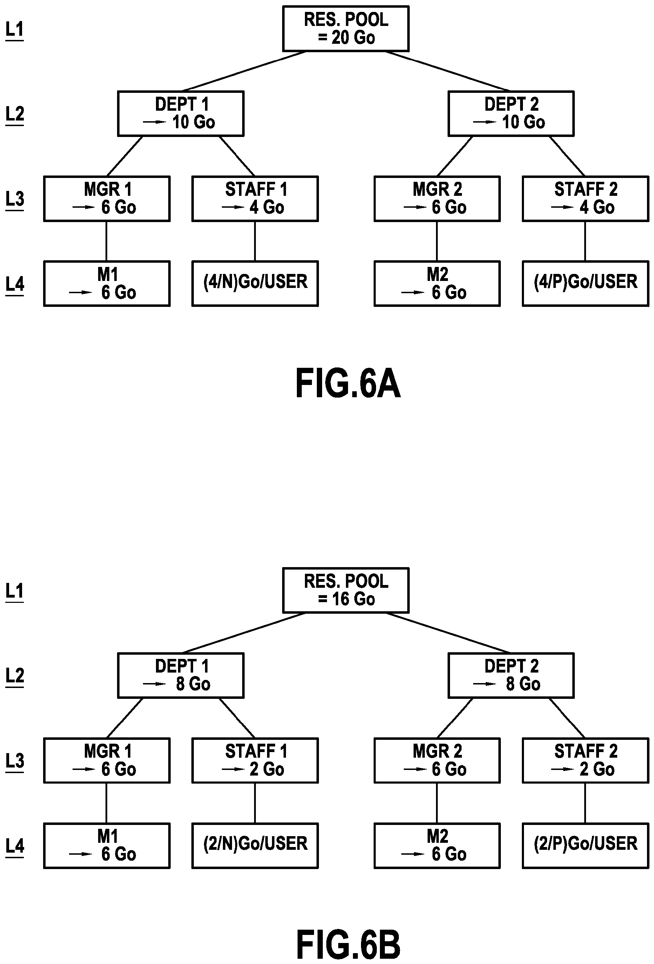

La mémoire morte 5C du dispositif de gestion 5 constitue un support d'enregistrement conforme à l'invention, lisible par le processeur 5A et sur lequel est enregistré un programme d'ordinateur conforme à l'invention, comportant des instructions pour l'exécution des étapes d'un procédé de gestion conforme à l'invention décrites maintenant en référence aux figures 5A-5B et 6A-6B, dans un mode particulier de réalisation.

Le procédé de gestion selon l'invention se déroule selon deux phases principales P1 et P2 mises en œuvre respectivement par les modules 6 et 7 du dispositif 5 de gestion.

La phase P1, illustrée à la **figure 5A****,** est une phase de maintien à jour des modèles MOD1 et MOD2 par le module 6 du dispositif 5, qui se déroule de manière continue ou quasi-continue, de sorte à garantir que les modèles MOD1 et MOD2 reflètent respectivement à chaque instant un état courant de l'ensemble 4 de ressources alloué à l'entité 2 et un état courant de l'entité 2, c'est-à-dire reflétant l'état réel de l'ensemble 4 et de l'entité 2.

A cette fin, une mise à jour de ces modèles est mise en œuvre par le module 6 du dispositif 5 lorsqu'un changement affectant l'ensemble 4 de ressources ou l'entité 2 est détecté (étape E10).

La détection d'un changement peut être réalisée de diverses manières.

Ainsi, par exemple, le module 6 du dispositif 5 peut être notifié par l'entité 2 elle-même et/ou par l'opérateur du système informatique 1, qu'un changement a eu lieu.

En variante, une synchronisation des informations contenues dans les modèles MOD1 et MOD2 peut être mise en œuvre périodiquement par le module 6 du dispositif 5 auprès de l'opérateur du système 1 et de l'entité 2, de sorte à détecter un changement affectant l'une de ces informations. La période de synchronisation sera choisie suffisamment petite pour s'assurer de disposer, lors de la réception d'une requête d'accès d'un utilisateur, d'un état courant de l'entité 2 et de l'ensemble 4 de ressources, qui corresponde à l'état réel de ces entités.

Dans un autre mode de réalisation, cette mise à jour peut être réalisée sur réception d'une requête d'accès d'un utilisateur à une ressource de l'ensemble 4.

Bien entendu, une combinaison de ces variantes peut également être envisagée.

Si le changement détecté affecte l'ensemble 4 de ressources (réponse oui à l'étape E20), le module 6 du dispositif 5 met alors à jour le modèle MOD1 (étape E30), sur la base des informations fournies par l'opérateur du système informatique 1 reflétant l'état courant de l'ensemble 4. Un tel changement peut intervenir notamment suite à une réallocation de ressources en fonction des besoins de l'entité 2 au cours d'une procédure « d'auto-scaling ».

Si le changement détecté affecte l'entité 2 (réponse oui à l'étape E40), le module 6 du dispositif 5 met à jour le modèle MOD2 (étape E50), sur la base des informations fournies par l'entité 2 et reflétant son état courant.

La phase P2 est une phase de traitement ponctuelle mise en œuvre par le module 7 du dispositif 5 de gestion sur réception d'une requête d'accès à au moins une partie de l'ensemble 4 de ressources d'un utilisateur ou d'un groupe d'utilisateurs (ex. un département, etc.) émise via son terminal.

Par souci de simplification, on suppose ici que la requête provient d'un utilisateur unique (par exemple l'utilisateur S1-2 (fig. 3B) de l'entité 2) et concerne la ressource virtuelle de stockage VSR de l'ensemble 4. Plus précisément, on suppose ici que la requête émise par l'utilisateur S1-2 par l'intermédiaire de son terminal concerne l'accès, via ce terminal, à un espace de 1.5 Gigaoctets (1.5 Go) au sein de la ressource virtuelle VSR.

Sur réception de la requête d'accès de l'utilisateur S1-2 (étape F10), le module 7 contrôle dans un premier temps les droits d'accès de l'utilisateur S1-2 à l'espace de stockage désigné dans la requête (étape test F20).

Dans le mode de réalisation décrit ici, comme mentionné précédemment, ces droits d'accès sont attribués en fonction du rôle de l'utilisateur S1-2 dans l'entité 2, et plus précisément, au sein du département DEPT 1.

Ils sont contrôlés ici par le module 7 de contrôle à l'aide d'un mécanisme de type OrBAC, connu de l'homme du métier, et non décrit en détail ici.

Bien entendu, d'autres mécanismes de contrôle des droits d'accès de l'utilisateur S1-2 peuvent être envisagés en variante.

Dans l'exemple envisagé ici, l'utilisateur S1-2 est associé au rôle STAFF1 identifié dans le niveau hiérarchique L3 du modèle MOD2.

On suppose ici, que d'après le modèle MOD2, chaque utilisateur associé au rôle STAFF1 est en droit d'accéder à l'espace de stockage VSR.

Le module 7 détermine ainsi que l'utilisateur S1-2 a le droit d'accéder via son terminal à l'espace de stockage VSR et donc à la ressource désignée dans sa requête (réponse oui à l'étape test F20).

Le module 7 procède alors dans un second temps, à l'identification des ressources destinées (ou allouables) à l'utilisateur S1-2 compte tenu de l'état courant de l'ensemble 4 de ressources informatiques et réseaux allouées à l'entité 2.

Au contraire, si l'utilisateur S1-2 n'est pas autorité à accéder, via son terminal, à l'espace de stockage VSR (réponse non à l'étape test F20), le module 7 rejette la requête d'accès de l'utilisateur S1-2 (étape F30).

Pour identifier les ressources informatiques et réseaux disponibles parmi l'ensemble 4 pour l'utilisateur S1-2, le module 7 détermine tout d'abord à quelle entité l'utilisateur S1-2 appartient (en l'espèce ici l'utilisateur S1-2 appartient à l'entité 2), selon des moyens connus en soi (étape F40).

Puis il applique à l'état courant de l'ensemble 4 de ressources allouées à l'entité 2, issu du modèle MOD1, les algorithmes d'allocation des ressources associés aux différents éléments des différents niveaux hiérarchiques du modèle MOD2 (étape F50). Grâce à la mise en œuvre de la phase P1 décrite précédemment par le module 6, les modèles MOD1 et MOD2 utilisés par le module 7 reflètent un état courant de l'ensemble 4 de ressources et de l'entité 2, au moment de la réception de la requête de l'utilisateur S1-2.

La **figure 6A** illustre le résultat de l'application des algorithmes du modèle MOD2, représenté à la figure 3B, à l'ensemble 4 de ressources représenté par le modèle MOD1, lorsque dans le modèle MOD1 de l'ensemble 4 de ressources indique qu'un espace de stockage virtuel VSR courant de 20 Go est alloué par le système informatique 1 à l'entité 2.

Plus précisément, le module 7 déroule pour chaque niveau hiérarchique du modèle MOD2, les algorithmes d'allocation de ressources associés aux éléments de ce niveau hiérarchique selon la répartition indiquée à la figure 3B. Il obtient ainsi :
- que les départements DEPT1 et DEPT2 étant tous deux associés à l'algorithme DRAA, se partagent chacun 10 Go de la ressource virtuelle de stockage VSR ;
- que les managers MGR1 et MGR2 étant tous deux associés à un algorithme SRAA avec une partie fixe de 6Go, se partagent chacun 6 Go, parmi les 10 Go attribués respectivement aux départements DEPT1 et DEPT2 ;
- que les utilisateurs de l'entité 2 associés au rôle STAFF1, respectivement au rôle STAFF2, se partagent entre eux de manière équitable 4 Go conformément à l'algorithme DRAA ;
- que les managers M1 et M2 disposent chacun de 6 Go ;
- tandis que les utilisateurs S1-1,...,S1-N (respectivement S2-1,...,S2-P) se voient chacun allouer (4/N) Go (respectivement (4/P) Go), conformément à la répartition prônée par l'algorithme DRAA.

Il convient de noter que dans le mode de réalisation décrit ici, par souci de simplification et de gain en termes de calculs, on se limite à appliquer les algorithmes d'allocation de ressources spécifiés dans le modèle MOD2 uniquement à la ressource virtuelle VCR de l'ensemble 4. Bien entendu, on pourrait également appliquer ces algorithmes aux ressources virtuelles VNWR et VCR, mais celles-ci ne sont pas concernées par la requête d'accès de l'utilisateur S1-2 dans l'exemple illustratif envisagé ici.

Autrement dit, en fonction du type de ressources désigné dans la requête et de la description de l'ensemble 4 de ressources alloué à l'entité 2, on appliquera en pratique les algorithmes d'allocation spécifiés dans le modèle MOD2 à toute ou partie des ressources de l'ensemble 4. Toutefois, par souci de simplification, on désignera de façon unique cette étape par application des algorithmes à l'ensemble 4 de ressources informatiques et réseaux mis à la disposition de l'entité 2 par le système informatique 1.

A l'issue de l'étape F50 (fig. 5B), le module 7 détermine donc que (4/N) Go d'espace de stockage est destiné à l'utilisateur S1-2, au vu de l'état courant de l'entité 2 et de l'ensemble 4 de ressources.

La **figure 6B** illustre le résultat de l'application des algorithmes d'allocation associés au modèle MOD2, représenté à la figure 3B, à l'ensemble 4 de ressources représenté par le modèle MOD1, lorsque dans le modèle MOD1 de l'ensemble 4 de ressources indique qu'un espace de stockage virtuel VSR courant de 16 Go est alloué par le système informatique 1 à l'entité 2.

Selon ce second exemple, le module 7 obtient à l'issue de l'étape F50 :
- que les départements DEPT1 et DEPT2 se partagent chacun 8 Go de la ressource virtuelle de stockage VSR ;
- que les managers MGR1 et MGR2 se partagent chacun 6 Go, parmi les 8 Go attribués respectivement aux départements DEPT1 et DEPT2 ;
- que les utilisateurs de l'entité 2 associés au rôle STAFF1, respectivement au rôle STAFF2, se partagent entre eux de manière équitable 2 Go conformément à l'algorithme DRAA ;
- que les managers M1 et M2 disposent chacun de 6 Go ;
- tandis que les utilisateurs S1-1,...,S1-N (respectivement S2-1,...,S2-P) se voient chacun allouer (2/N) Go (respectivement (2/P) Go).

A l'issue de l'étape F50, selon ce second exemple, le module 7 détermine donc que (2/N) Go d'espace de stockage est réservé (destiné) à l'utilisateur S1-2.

Le module 7 vérifie alors la compatibilité des ressources identifiées à l'étape F50 avec la ressource désignée dans la requête reçue de l'utilisateur S1-2 (à savoir, 1.5 Go d'espace de stockage) (étape test F60).

Si les ressources sont compatibles (par exemple ici, si l'espace de stockage désigné dans la requête est inférieur à l'espace de stockage réservé à l'utilisateur S1-2 par le système informatique 1 compte tenu des algorithmes de partage spécifiés entre les utilisateurs de l'entité 2) (réponse oui à l'étape test F60), la requête de l'utilisateur S1-2 est acceptée (étape F70).

C'est le cas notamment de l'exemple illustré à la figure 6A, si l'on suppose le nombre N égal à 2. En effet, 2 Go sont mis à la disposition de l'utilisateur S1-2 par le système informatique 1 parmi l'ensemble 4 de ressources, alors que l'utilisateur S1-2 ne requiert que 1.5 Go dans sa requête.

Il convient de noter que la vérification de la compatibilité des ressources peut prendre en compte, pour d'autres requêtes, l'occupation actuelle par l'utilisateur des ressources qui lui sont réservées.

En revanche, si les ressources ne sont pas compatibles (ex. l'utilisateur requiert un espace de stockage supérieur à celui qui lui est réservé), la requête de l'utilisateur S1-2 est rejetée (étape F30).

C'est le cas notamment de l'exemple illustré à la figure 6B, si l'on suppose le nombre N égal à 2. En effet, 1 Go est mis à la disposition de l'utilisateur S1-2 par le système informatique 1 parmi l'ensemble 4 de ressources, alors que l'utilisateur S1-2 requiert 1.5 Go dans sa requête. Ce rejet peut être suivi d'une réallocation d'un espace de stockage plus important par le système informatique 1 à l'entité 2 selon un processus d'auto-scaling.

L'invention permet donc non seulement de gérer les droits d'accès aux ressources mises à la disposition des utilisateurs de l'entité 2 par le système informatique 1, mais également la disponibilité de ces ressources, qui peut être amenée à évoluer dans le temps compte tenu du service à la demande fourni par le système informatique 1.

Comme mentionné précédemment, l'invention respecte avantageusement l'architecture fonctionnelle de référence XACML définie par le standard IETF (et utilisée notamment par le modèle de contrôle d'accès OrBAC), et décrite notamment dans les documents RFC 2753 et RFC 3060 édités par l'IETF.

L'invention propose avantageusement d'étendre dans cette architecture XACML, les fonctions des blocs fonctionnels PIP et PDP de sorte à prendre en compte les informations fournies par le système de cloud computing et à réaliser un contrôle de la disponibilité des ressources requises par l'utilisateur, compte tenu du partage des ressources spécifié par l'entité 2 et de l'état courant de l'ensemble 4 de ressources alloué à l'entité 2 par le système de cloud computing.

## Revendications

1. Procédé de gestion de l'accès à un ensemble (4) de ressources informatiques et réseaux mis à la disposition d'une entité (2) comprenant une pluralité d'utilisateurs (3), par un système informatique en nuage (1), ce procédé comprenant :
- une étape (E30,E50) de maintien à jour :
∘ d'un premier modèle (MOD1) décrivant l'ensemble (4) de ressources informatiques et réseaux mis à la disposition de l'entité par le système informatique ; et
∘ d'un second modèle (MOD2) hiérarchique à plusieurs niveaux décrivant une organisation hiérarchique de l'entité (2), chaque niveau (L1,L2,L3,L4) de ce second modèle comprenant au moins un élément regroupant un ou plusieurs utilisateurs (3) de l'entité, chaque élément d'un dit niveau hiérarchique étant associé à un algorithme d'allocation d'au moins une partie de l'ensemble (4) de ressources, l'union des éléments de ce niveau hiérarchique regroupant la pluralité d'utilisateurs (3) de l'entité (2), lesdits algorithmes d'allocation permettant de spécifier comment sont partagées les ressources de l'ensemble de ressources à chaque niveau hiérarchique du second modèle ;
ladite étape de maintien à jour étant réalisée de sorte que le premier modèle (MOD1) et le second modèle (MOD2) reflètent un état courant de l'ensemble (4) de ressources et un état courant de l'entité (2) à un instant donné ;
- sur réception (F10) d'une requête d'accès d'au moins un utilisateur (S1-2) de l'entité (2) à au moins une ressource de l'ensemble (4) de ressources désignée dans la requête :
∘ une étape (F50) d'identification des ressources destinées audit au moins un utilisateur parmi l'ensemble (4) de ressources, en appliquant les algorithmes d'allocation de ressources associés aux éléments du second modèle maintenu à jour à l'état courant de l'ensemble (4) de ressources au moment de la réception de la requête, reflété par le premier modèle, ladite application permettant de déterminer une répartition de l'ensemble des ressources mis à la disposition de l'entité par le système informatique au moment de la réception de la requête entre les éléments de chaque niveau hiérarchique du second modèle ;
∘ une étape (F60) de vérification de la compatibilité de ladite au moins une ressource désignée dans la requête avec les ressources destinées audit au moins un utilisateur parmi l'ensemble (4) de ressources identifiées lors de l'étape d'identification ; et
∘ une étape de rejet (F30) de la requête en cas d'incompatibilité.

2. Procédé selon la revendication 1 comprenant en outre une étape (F20) de contrôle d'un droit d'accès dudit au moins un utilisateur à ladite au moins une ressource désignée dans la requête, cette requête étant rejetée (F30) si ledit au moins un utilisateur n'a pas le droit d'accéder à cette ressource.

3. Procédé selon la revendication 2 dans lequel l'étape de contrôle (F20) du droit d'accès est mise en œuvre à l'aide d'un mécanisme de type OrBAC (Organization Based Access Control) et dans lequel, pour au moins un niveau hiérarchique (L3) du second modèle, on associe un rôle à chaque élément de ce niveau.

4. Procédé selon la revendication 2 ou 3 dans lequel, dans le second modèle hiérarchique (MOD2), on associe en outre à chaque élément d'au moins un niveau hiérarchique des droits d'accès aux ressources de l'ensemble (4) de ressources, l'étape de contrôle (F20) du droit d'accès étant mise en œuvre à partir du second modèle hiérarchique maintenu à jour.

5. Procédé selon l'une quelconque des revendications 1 à 4 dans lequel le premier modèle (MOD1) décrivant l'ensemble (4) des ressources informatiques et réseaux est un modèle hiérarchique à plusieurs niveaux.

6. Procédé selon la revendication 5 dans lequel dans le premier modèle :
- un niveau hiérarchique décrit des ressources informatiques et réseaux virtuelles de l'ensemble (4) de ressources ; et
- un niveau hiérarchique décrit des ressources informatiques et réseaux physiques de l'ensemble (4) de ressources associées à ces ressources virtuelles.

7. Procédé selon l'une quelconque des revendications 1 à 6 dans lequel au moins un algorithme d'allocation des ressources informatiques et réseaux associé à un élément d'un niveau hiérarchique du second modèle est un algorithme de répartition équitable des ressources entre des éléments du niveau hiérarchique.

8. Procédé selon l'une quelconque des revendications 1 à 7 dans lequel au moins un algorithme d'allocation des ressources informatiques et réseaux associé à un élément d'un niveau hiérarchique du second modèle est un algorithme consistant à allouer à cet élément une partie fixe des ressources, les ressources non allouées audit élément étant réparties entre les autres éléments du niveau hiérarchique.

9. Programme d'ordinateur comportant des instructions pour l'exécution des étapes du procédé de gestion selon l'une quelconque des revendications 1 à 8 lorsque ledit programme est exécuté par un ordinateur.

10. Support d'enregistrement lisible par un ordinateur sur lequel est enregistré un programme d'ordinateur comprenant des instructions pour l'exécution des étapes du procédé de gestion selon l'une quelconque des revendications 1 à 8.

11. Dispositif (5) de gestion de l'accès à un ensemble (4) de ressources informatiques et réseaux mis à la disposition d'une entité (2) comprenant une pluralité d'utilisateurs (3), par un système informatique en nuage (1), ledit dispositif comprenant :
- un module (6) de maintien à jour :
∘ d'un premier modèle (MOD1) décrivant l'ensemble (4) de ressources informatiques et réseaux mis à la disposition de l'entité par le système informatique ; et
∘ d'un second modèle (MOD2) hiérarchique à plusieurs niveaux décrivant une organisation hiérarchique de l'entité, chaque niveau (L1,L2,L3,L4) de ce second modèle comprenant au moins un élément regroupant un ou plusieurs utilisateurs de l'entité, chaque élément d'un dit niveau hiérarchique étant associé à un algorithme d'allocation d'au moins une partie de l'ensemble de ressources informatiques et réseaux, l'union des éléments de ce niveau hiérarchique regroupant la pluralité d'utilisateurs de l'entité, lesdits algorithmes d'allocation permettant de spécifier comment sont partagées les ressources de l'ensemble de ressources à chaque niveau hiérarchique du second modèle ;
ledit module (6) de maintien à jour étant configuré de sorte que le premier modèle et le second modèle reflètent un état courant dudit ensemble de ressources informatiques et réseaux, et un état courant de l'entité à un instant donné;
- un module (7) activé sur réception d'une requête d'accès d'au moins un utilisateur (S1-2) de l'entité à au moins une ressource de l'ensemble de ressources informatiques et réseaux désignée dans la requête, comprenant :
∘ une unité d'identification des ressources destinées audit au moins un utilisateur parmi l'ensemble (4) de ressources, apte à appliquer les algorithmes d'allocation associés aux éléments du second modèle maintenu à jour à l'état courant de l'ensemble de ressources au moment de la réception de la requête reflété par le premier modèle, ladite application permettant de déterminer une répartition de l'ensemble des ressources mis à la disposition de l'entité par le système informatique au moment de la réception de la requête entre les éléments de chaque niveau hiérarchique du second modèle ;
∘ une unité de vérification de la compatibilité de ladite au moins une ressource désignée dans la requête avec les ressources destinées audit au moins un utilisateur parmi l'ensemble (4) de ressources identifiées par l'unité d'identification ; et
∘ une unité de rejet de ladite requête activée en cas d'incompatibilité.

12. Système informatique en nuage (1) mettant à disposition d'une entité (2) comprenant une pluralité d'utilisateurs (3), un ensemble (4) de ressources informatiques et réseaux et comprenant un dispositif (5) de gestion de l'accès audit ensemble de ressources selon la revendication 11.

## Patentansprüche

1. Verfahren für die Verwaltung des Zugriffs auf eine Reihe (4) von IT- und Netzwerk-Ressourcen, die einer eine Vielzahl von Benutzern (3) umfassenden Entität (2) durch ein Cloud-IT-System (1) zur Verfügung gestellt wird, wobei dieses Verfahren umfasst:
- einen Schritt (E30, E50) der Aktualisierung:
∘ eines ersten Modells (MODI), das die Reihe (4) von IT- und Netzwerk-Ressourcen beschreibt, die der Entität durch das IT-System zur Verfügung gestellt werden; und
∘ eines hierarchischen zweiten Modells (MOD2) mit mehreren Ebenen, das eine hierarchische Organisation der Entität (2) beschreibt, wobei jede Ebene (L1, L2, L3, L4) dieses zweiten Modells mindestens ein Element umfasst, das einen oder mehrere Benutzer (3) der Entität zusammenfasst, wobei jedes Element einer hierarchischen Ebene mit einem Zuweisungsalgorithmus für mindestens einen Teil der Reihe (4) von Ressourcen verknüpft ist, wobei die Gemeinschaft der Elemente dieser hierarchischen Ebene die Vielzahl von Benutzern (3) der Entität (2) zusammenfasst, wobei die Zuweisungsalgorithmen eine Spezifizierung ermöglichen, wie die Ressourcen der Reihe von Ressourcen auf jeder hierarchischen Ebene des zweiten Modells verteilt werden;
wobei der Schritt der Aktualisierung so realisiert wird, dass das erste Modell (MOD1) und das zweite Modell (MOD2) einen aktuellen Zustand der Reihe (4) von Ressourcen und einen aktuellen Zustand der Entität (2) zu einem gegebenen Zeitpunkt abbilden;
- bei Empfang (F10) einer Zugriffsanforderung von mindestens einem Benutzer (S1-2) der Entität (2) für mindestens eine in der Anforderung bezeichnete Ressource der Reihe (4) von Ressourcen:
∘ einen Schritt (F50) der Identifizierung der Ressourcen, die aus der Reihe (4) von Ressourcen für den mindestens einen Benutzer bestimmt sind, indem die Ressourcenzuweisungsalgorithmen angewandt werden, die mit den Elementen des zweiten Modells verknüpft sind, das zum Zeitpunkt des Empfangs der Anforderung auf den aktuellen Zustand der vom ersten Modell abgebildeten Reihe (4) von Ressourcen aktualisiert wird, wobei die Anwendung ermöglicht, eine Verteilung der Reihe der Ressourcen, die der Entität zum Zeitpunkt des Empfangs der Anforderung durch das IT-System zur Verfügung gestellt wird, auf die Elemente jeder hierarchischen Ebene des zweiten Modells zu bestimmen;
∘ einen Schritt (F60) der Überprüfung der Kompatibilität der mindestens einen in der Anforderung bezeichneten Ressource mit den Ressourcen, die aus der im Schritt der Identifizierung identifizierten Reihe (4) von Ressourcen für den mindestens einen Benutzer bestimmt wurden; und
∘ einen Schritt der Ablehnung (F30) der Anforderung im Falle der Inkompatibilität.

2. Verfahren nach Anspruch 1, das außerdem einen Schritt (F20) der Kontrolle eines Zugriffsrechts des mindestens einen Benutzers auf die in der Anforderung bezeichnete mindestens eine Ressource umfasst, wobei diese Anforderung abgelehnt (F30) wird, wenn der mindestens eine Benutzer nicht das Recht hat, auf diese Ressource zuzugreifen.

3. Verfahren nach Anspruch 2, wobei der Schritt der Kontrolle (F20) des Zugriffsrechts mithilfe eines Mechanismus vom Typ OrBAC (Organization Based Access Control) umgesetzt wird und wobei für mindestens eine hierarchische Ebene (L3) des zweiten Modells jedem Element dieser Ebene eine Rolle zugeordnet wird.

4. Verfahren nach Anspruch 2 oder 3, wobei im hierarchischen zweiten Modell (MOD2) außerdem jedem Element mindestens einer hierarchischen Ebene Zugriffsrechte für die Ressourcen der Reihe (4) von Ressourcen zugeordnet werden, wobei der Schritt der Kontrolle (F20) des Zugriffsrechts anhand des aktualisierten hierarchischen zweiten Modells umgesetzt wird.

5. Verfahren nach einem der vorhergehenden Ansprüche 1 bis 4, wobei das erste Modell (MODI), das die Reihe (4) der IT- und Netzwerk-Ressourcen beschreibt, ein hierarchisches Modell mit mehreren Ebenen ist.

6. Verfahren nach Anspruch 5, wobei im ersten Modell:
- eine hierarchische Ebene virtuelle IT- und Netzwerk-Ressourcen der Reihe (4) von Ressourcen beschreibt; und
- eine hierarchische Ebene physische IT- und Netzwerk-Ressourcen der Reihe (4) von Ressourcen beschreibt, die diesen virtuellen Ressourcen zugeordnet sind.

7. Verfahren nach einem der Ansprüche 1 bis 6, wobei mindestens ein Zuweisungsalgorithmus für die IT- und Netzwerk-Ressourcen, der einem Element einer hierarchischen Ebene des zweiten Modells zugeordnet ist, ein Algorithmus der gleichmäßigen Verteilung der Ressourcen auf die Elemente der hierarchischen Ebene ist.

8. Verfahren nach einem der Ansprüche 1 bis 7, wobei mindestens ein Zuweisungsalgorithmus für die IT- und Netzwerk-Ressourcen, der einem Element einer hierarchischen Ebene des zweiten Modells zugeordnet ist, ein Algorithmus ist, der darin besteht, diesem Element einen festen Teil der Ressourcen zuzuweisen, wobei die dem Element nicht zugewiesenen Ressourcen auf die anderen Elemente der hierarchischen Ebene verteilt werden.

9. Computerprogramm, das Anweisungen zur Ausführung der Schritte des Verfahrens für die Verwaltung nach einem der Ansprüche 1 bis 8 umfasst, wenn das Programm von einem Computer ausgeführt wird.

10. Computerlesbares Aufzeichnungsmedium, auf dem ein Computerprogramm aufgezeichnet ist, das Anweisungen für die Ausführung der Schritte des Verfahrens für die Verwaltung nach einem der Ansprüche 1 bis 8 umfasst.

11. Vorrichtung (5) für die Verwaltung des Zugriffs auf eine Reihe (4) von IT- und Netzwerk-Ressourcen, die einer eine Vielzahl von Benutzern (3) umfassenden Entität (2) durch ein Cloud-IT-System (1) zur Verfügung gestellt werden, wobei die Vorrichtung umfasst:
- ein Modul (6) zur Aktualisierung:
∘ eines ersten Modells (MODI), das die Reihe (4) von IT- und Netzwerk-Ressourcen beschreibt, die der Entität durch das IT-System zur Verfügung gestellt werden; und
∘ eines hierarchischen zweiten Modells (MOD2) mit mehreren Ebenen, das eine hierarchische Organisation der Entität beschreibt, wobei jede Ebene (L1, L2, L3, L4) dieses zweiten Modells mindestens ein Element umfasst, das einen oder mehrere Benutzer der Entität zusammenfasst, wobei jedes Element einer hierarchischen Ebene mit einem Zuweisungsalgorithmus für mindestens einen Teil der Reihe von IT- und Netzwerk-Ressourcen verknüpft ist, wobei die Gemeinschaft der Elemente dieser hierarchischen Ebene die Vielzahl von Benutzern der Entität zusammenfasst, wobei die Zuweisungsalgorithmen eine Spezifizierung ermöglichen, wie die Ressourcen der Reihe von Ressourcen auf jeder hierarchischen Ebene des zweiten Modelles verteilt werden;
wobei das Modul (6) zur Aktualisierung so konfiguriert ist, dass das erste Modell und das zweite Modell einen aktuellen Zustand der Reihe von IT- und Netzwerk-Ressourcen und einen aktuellen Zustand der Entität zu einem gegebenen Zeitpunkt abbilden;
- ein Modul (7), das bei Empfang einer Zugriffsanforderung von mindestens einem Benutzer (S1-2) der Entität für mindestens eine in der Anforderung bezeichnete Ressource der Reihe von Ressourcen aktiviert wird, umfassend:
∘ eine Einheit zur Identifizierung der Ressourcen, die aus der Reihe (4) von Ressourcen für den mindestens einen Benutzer bestimmt sind, mit der Fähigkeit zur Anwendung der Zuweisungsalgorithmen, die mit den Elementen des zweiten Modells verknüpft sind, das zum Zeitpunkt des Empfangs der Anforderung auf den aktuellen Zustand der vom ersten Modell abgebildeten Reihe von Ressourcen aktualisiert wird, wobei die Anwendung ermöglicht, eine Verteilung der Reihe der Ressourcen, die der Entität zum Zeitpunkt des Empfangs der Anforderung durch das IT-System zur Verfügung gestellt wird, auf die Elemente jeder hierarchischen Ebene des zweiten Modells zu bestimmen;
∘ eine Einheit zur Überprüfung der Kompatibilität der mindestens einen in der Anforderung bezeichneten Ressource mit den Ressourcen, die aus der durch die Einheit zur Identifizierung identifizierten Reihe (4) von Ressourcen für den mindestens einen Benutzer bestimmt werden; und
∘ eine Einheit der Ablehnung der Anforderung, die im Falle der Inkompatibilität aktiviert wird.

12. Cloud-IT-System (1), das einer eine Vielzahl von Benutzern (3) umfassenden Entität (2) eine Reihe (4) von IT- und Netzwerk-Ressourcen zur Verfügung stellt und eine Vorrichtung (5) für die Verwaltung des Zugriffs auf die Reihe von Ressourcen nach Anspruch 11 umfasst.

## Claims

1. Method for managing access to a set (4) of computing and network resources made available to an entity (2) comprising a plurality of users (3), by a cloud computing system (1), this method comprising:
- a step (E30, E50) of keeping up to date:
∘ a first model (MOD1) describing the set (4) of computing and network resources made available to an entity by the computing system; and
∘ a second, hierarchical model (MOD2) with multiple levels describing a hierarchical organization of the entity (2), each level (L1, L2, L3, L4) of this second model comprising at least one element grouping together one or more users (3) of the entity, each element of one said hierarchical level being associated with an allocation algorithm for at least part of the set (4) of resources, the union of the elements of this hierarchical level grouping together the plurality of users (3) of the entity (2), said allocation algorithms making it possible to specify how the resources of the set of resources are shared to each hierarchical level of the second model;
said step of keeping up to date being carried out so that the first model (MOD1) and the second model (MOD2) reflect a current state of the set (4) of resources and a current state of the entity (2) at a given time;
- on reception (F10) of a request for access from at least one user (S1-2) of the entity (2) to at least one resource of the set (4) of resources that is designated in the request:
∘ a step (F50) of identifying the resources that are intended for said at least one user from among the set (4) of resources, by applying the resource allocation algorithms that are associated with the elements of the second model that is kept up to date with the current state the set (4) of resources at the time of reception of the request, which is reflected by the first model, said application making it possible to determine a distribution of the set of resources made available to the entity by the computing system at the time of reception of the request between the elements of each hierarchical level of the second model;
∘ a step (F60) of checking the compatibility of said at least one resource designated in the request with the resources that are intended for said at least one user from among the set (4) of resources that were identified in the identifying step; and
∘ a step of rejecting (F30) the request in the event of incompatibility.

2. Method according to Claim 1, further comprising a step (F20) of controlling a right of access of said at least one user to said at least one resource designated in the request, this request being rejected (F30) if said at least one user does not have the right to access this resource.

3. Method according to Claim 2, in which the step of controlling (F20) the right of access is implemented using an OrBAC (Organization Based Access Control)-type mechanism and in which, for at least one hierarchical level (L3) of the second model, a role is associated with each element of this level.

4. Method according to Claim 2 or 3, in which, in the second hierarchical model (MOD2), each element of at least one hierarchical level is further associated with rights of access to the resources of the set (4) of resources, the step of controlling (F20) the right of access being implemented on the basis of the second hierarchical model kept up to date.

5. Method according to any one of Claims 1 to 4, in which the first model (MOD1) describing the set (4) of computing and network resources is a hierarchical model with multiple levels.

6. Method according to Claim 5, in which in the first model:
- a hierarchical level describes computing resources and virtual networks of the set (4) of resources; and
- a hierarchical level describes computing resources and physical networks of the set (4) of resources that are associated with these virtual resources.

7. Method according to any one of Claims 1 to 6, in which at least one algorithm for allocating the computing and network resources that is associated with an element of a hierarchical level of the second model is an algorithm for the fair distribution of resources between elements of the hierarchical level.

8. Method according to any one of Claims 1 to 7, in which at least one algorithm for allocating the computing and network resources that is associated with an element of a hierarchical level of the second model is an algorithm consisting in allocating a fixed part of the resources to this element, the resources not allocated to said element being distributed between the other elements of the hierarchical level.

9. Computer program comprising instructions for executing the steps of the management method according to any one of Claims 1 to 8 when said program is executed by a computer.

10. Computer-readable storage medium on which is stored a computer program comprising instructions for executing the steps of the management method according to any one of Claims 1 to 8.

11. Device (5) for managing access to a set (4) of computing and network resources made available to an entity (2) comprising a plurality of users (3), by a cloud computing system (1), said method comprising:
- a module (6) for keeping up to date:
∘ a first model (MOD1) describing the set (4) of computing and network resources made available to the entity by the computing system; and
∘ a second, hierarchical model (MOD2) with multiple levels describing a hierarchical organization of the entity, each level (L1, L2, L3, L4) of this second model comprising at least one element grouping together one or more users of the entity, each element of one said hierarchical level being associated with an allocation algorithm for at least part of the set of computing and network resources, the union of the elements of this hierarchical level grouping together the plurality of users of the entity, said allocation resources making it possible to specify how the resources of the set of resources are shared to each hierarchical level of the second model;
said module (6) for keeping up to date being configured so that the first model and the second model reflect a current state of said set of computing and network resources and a current state of the entity at a given time;
- a module (7) activated on reception of a request for access from at least one user (S1-2) of the entity to at least one resource of the set of computing and network resources that is designated in the request, comprising:
∘ a unit for identifying the resources that are intended for said at least one user from among the set (4) of resources, suitable for applying the allocation algorithms that are associated with the elements of the second model that is kept up to date with the current state the set of resources at the time of reception of the request which is reflected by the first model, said application making it possible to determine a distribution of the set of resources made available to the entity by the computing system at the time of reception of the request between the elements of each hierarchical level of the second model;
∘ a unit for checking the compatibility of said at least one resource designated in the request with the resources that are intended for said at least one user from among the set (4) of resources that were identified by the identifying unit; and
∘ a unit for rejecting said activated request in the event of incompatibility.

12. Cloud computing system (1) making available to an entity (2) comprising a plurality of users (3) a set (4) of computing and network resources and comprising a device (5) for managing access to said set of resources according to Claim 11.
